# EUROPEAN PATENT SPECIFICATION

(11) **EP 0 735 003 B1**
(45) Date of publication and mention of the grant of the patent: **16.08.2000**
(21) Application number: 96302019.3
(22) Date of filing: 25.03.1996
(51) Int. Cl.: C01F 7/02

(54) **Methode of making an aluminium magnesium oxide,and fine powder thereof**
Aluminium-Magnesiumoxid, Verfahren zur Herstellung davon und daraus bestehende feine pulverartige Teilchen
Oxyde d'aluminium et de magnésium, son procédé de préparation et poudre fine de cet oxyde

(30) Priority: 28.03.1995 JP 9603195
(43) Date of publication of application: 02.10.1996
(73) Proprietor: Taimei Kagaku Kogyo Kabushiki Kaisha, Kammiina-gun, Nagano-ken (JP)
(72) Inventor: Kamiyanagi, Tokio, c/o Taimei Kagaku Kogyo K.K., Kamiina-gun, Nagano-ken (JP); Fujita, Takayuki, c/o Taimei Kagaku Kogyo K.K., Kamiina-gun, Nagano-ken (JP); Harumiya, Noriho, c/o Taimei Kagaku Kogyo K.K., Kamiina-gun, Nagano-ken (JP)
(74) Representative: Brewster, Andrea Ruth

(56) References cited:
- EP-A- 0 295 389
- EP-A- 0 371 211
- GB-A- 2 184 715
- CERAMICS INTERNATIONAL , vol. 8, no. 1, 1982, pages 17-21, XP002006786 Y. SUYAMA ET AL.: "Characterization and sintering of Mg-Al spinel prepared by spray-pyrolysis technique."
- JOURNAL OF MATERIALS SCIENCE., vol. 25, no. 4, April 1990, LONDON (GB), pages 2227-2232, XP000200599 D. VOLLATH: "Pyrolytic preparation of ceramic powders by a spray calcination technique."
- Japanese Patent Publication Gazette: Abstract of JP-B-01043712 (JP-A-60122779)
- JIS H 1902 (Japanes Industrial Standard), Method for determination on physical properties of aluminium oxide.

## Description

The present invention relates to a method of making an aluminium-magnesium oxide, and a fine powder thereof.

An aluminium-magnesium oxide having a spinel-type crystal form is chemically and physically stable. Porous aluminium-magnesium oxides are used for catalytic agents, support bodies of catalytic agents, adsorbents, molecular sieves, filters, etc.

An aluminium-magnesium oxide powder was disclosed in Japanese Patent Publication Gazette No. 1-43712. It is made by a spray roasting method: spraying an aqueous solution of an aluminium salt and a magnesium salt in an oxidizing atmosphere at a temperature of 800°C or more; and roasting a mist of said aqueous solution therein.

Suyama and Kato, in "Characterization and Sintering of Mg-Al Spinel Prepared by Spray-pyrolysis Technique", *Ceramics International,* 8, no. 1, 1982 pp17-21, disclose the preparation of a magnesium aluminate spinel from a solution of magnesium and aluminium nitrates by spray pyrolysis at 740-1030°C. Their product was in the form of hollow spheres 1-20 µm in size.

Vollath, in "Pyrolytic preparations of ceramic powders by a spray calcination technique", *Journal of Materials Science*, 25, no. 4, 1990, pp2227-2232, describes the preparation of magnesium spinel powders, again from nitrate solutions, using a simultaneous spray drying calcination technique.

When such powders are for use in catalytic agents, etc., a high specific surface area is desired, so that the particle diameter should be made as small as possible.

The aluminium-magnesium oxide can be used for fireproof materials and construction materials due to its heat-resisting property and corrosion-resisting property. In this case too, the diameter of the particles should be made as small as possible so as to make their toughness greater by densification.

In said spray roasting method, the mist of the aqueous solution should be fine so as to make the diameter of the particles smaller. But the degree of fineness of the mist is limited by the viscosity of the aqueous solution, etc., so the particles must be made smaller by pulverizing.

However, we have found that it is very difficult to make the particles made by the spray roasting method fine by pulverizing.

The inventors of the present invention have now found that a fine aluminium-magnesium oxide powder can be made by the steps of: making hollow particles of the aluminium-magnesium oxide whose loose bulk density is made as small as possible and whose average diameter is made as great as possible, by the spray roasting method; and pulverizing said hollow particles.

According to the present invention in a first aspect there is provided a method of making an aluminium magnesium oxide, comprising the steps of:
spraying an aqueous solution of an aluminium salt and a magnesium salt in an oxidising atmosphere, wherein said aqueous solution is a basic aqueous solution including said aluminium salt and said magnesium salt in which the total content of the aluminium salt and magnesium salt calculated as oxides is 12-20 wt%; and
roasting said sprayed aqueous solution so as to make an aluminium magnesium oxide mainly having the spinel-type crystal form, which is in the form of hollow particles having an average diameter of 10 µm or more and a loose bulk density of 0.15 g/cm³ or less. Desirably said oxide comprises 70-73 wt% of aluminium calculated as alumina (Al₂O₃) and 27-30 wt% of magnesium calculated as magnesia (MgO).

In the method, the molar ratios in the basic aqueous solution may satisfy the following formulas:$\text{Mg/Al = 0.46-0.55;}$ and$\text{Cl/Al = 1.3-3.7.}$

In the method, the aluminium salt may be poly aluminium chloride.

In a second aspect the invention provides a method of making fine aluminium magnesium oxide powder comprising the steps of:
spraying an aqueous solution of an aluminium salt and a magnesium salt in an oxidising atmosphere, wherein said aqueous solution is a basic aqueous solution including said aluminium salt and said magnesium salt in which the total content of the aluminium salt and magnesium salt calculated as oxides is 12-20 wt%;
roasting said sprayed aqueous solution so as to make an aluminium magnesium oxide mainly having the spinel-type crystal form, which is in the form of hollow particles having an average diameter of 10 µm or more and a loose bulk density of 0.15 g/cm³ or less; and
pulverizing said hollow particles into said fine powder having a particle size of 1µm or less.

The loose bulk density of the fine powder may be 0.5 g/cm³ or more. If it is for use as a ceramic material, a fine sintered product, which is made of said ceramic material, can be made by burning.

In the present invention, by employing the basic aqueous solution for the spray roasting, the viscosity of the aqueous solution can be kept low, so that the concentration of the aluminium salt and the magnesium salt therein can be higher than that in the conventional method.

By the spray roasting method with the aqueous solution in which the concentration of the aluminium salt and the magnesium salt is high, we can produce hollow particles whose walls are thin so that they can easily be made fine by pulverizing.

The detailed mechanism of formation of the hollow grains is not clearly known, but we presume the reason is that the surface energy of the basic aqueous solution, in which the concentration of the aluminium salt and the magnesium salt is high, is small, so that shrinkage of the mist of said aqueous solution is restricted.

Embodiments of the present invention will now be described by way of examples and with reference to the accompanying drawings, in which:
Fig. 1 shows particles of the aluminium-magnesium oxide of the present invention, made by the spray roasting method, as seen by a scanning electron microscope (500x magnification);
Fig. 2 shows sectional faces of the particles shown in Fig. 1, as seen by the scanning electron microscope (500x magnification);
Fig. 3 shows particles of aluminium-magnesium oxide, which is made by the spray roasting method but in which the aqueous solution is not as required by the present invention, as seen by a scanning electron microscope (500x magnification); and
Fig. 4 is an enlarged view showing sectional faces of the particles shown in Fig. 3, as seen by the scanning electron microscope (500x magnification).

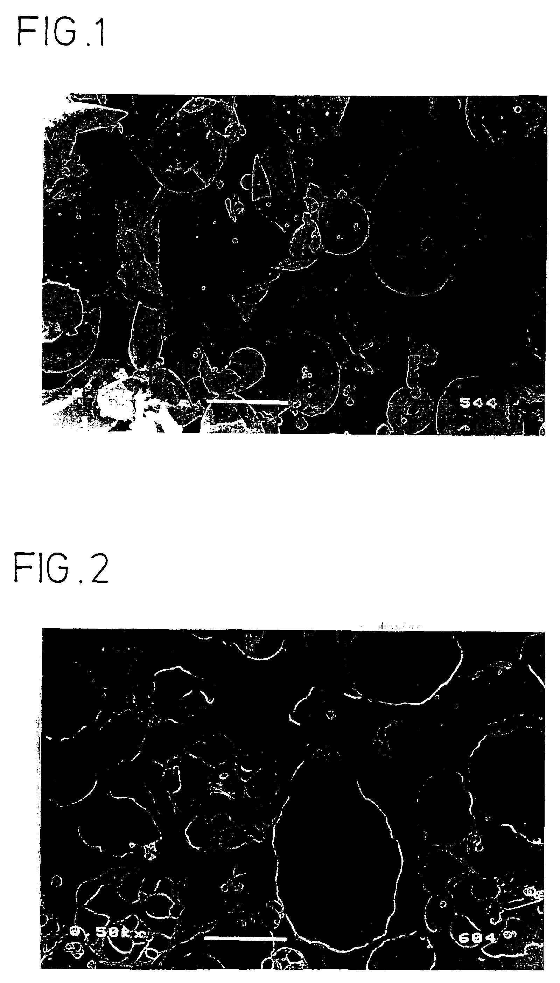

In Figs. 1-4, each of the scale indicator lines shown in white represents a real distance of 40 µm.

Preferred embodiments of the present invention will now be described in detail with reference to the accompanying drawings.

The aluminium-magnesium oxide produced by preferred embodiments of the present invention is in the form of particles (which include 70-73 wt% of aluminium calculated as alumina (Al₂O₃), and 27-30 wt% of magnesium, calculated as magnesia (MgO); and it mainly has the spinel-type crystal form.

By the present invention, the oxide is produced as hollow grains or particles. To pulverize the hollow grains into fine powder, the hollow grains are required to have a loose bulk density of 0.15 g/cm³ or less (preferably 0.02-0.10 g/cm³), and average grain diameter of 10 µm or more (preferably 12-40 µm).

If the hollow grains have a loose bulk density of more than 0.15 g/cm³ or the average grain diameter of less than 10 µm, they are very difficult to pulverize.

The present invention uses the spray roasting method: spraying an aqueous solution of aluminium salt and magnesium salt in an oxidizing atmosphere; and roasting the sprayed aqueous solution therein.

It is important that the aqueous solution is a basic aqueous solution including aluminium salt and magnesium salt in which the total concentration of the aluminium salt and the magnesium salt, calculated as oxides, is 12-20 wt%.

An aqueous solution of a normal aluminium salt, e.g., aluminium chloride, and a normal magnesium salt, e.g., magnesium chloride, has a viscosity higher than that of a basic aqueous solution of the same amount of aluminium salt and magnesium salt, so that the aqueous solution should be heated so as to make the viscosity lower.

Further, in the aqueous solution of the normal salts, if the total concentration of the aluminium salt and the magnesium salt therein, calculated as oxides, is 12 wt% or more, a homogeneous solution cannot be made.

As described above, even if the aqueous solution of the normal salt having the oxide-converted concentration of lower than 12 wt% is sprayed and roasted, the hollow grains having a high hollow rate cannot be formed. In the present invention, basic aluminium salts, e.g., poly aluminium chloride, may be employed as the aluminium salt. The poly aluminium chloride disclosed in Japanese Patent Publication Gazette No. 50-836, for example, may be preferably employed.

On the other hand, magnesium chloride (anhydride salt, hydrate salt), magnesium hydroxide, magnesium carbonate, etc. may be employed as the magnesium salt, which is employed together with the aluminium salt.

In the basic aqueous solution of the aluminium salt and the magnesium salt, the poly aluminium chloride (the basic aluminium salt) and the magnesium chloride, etc. (the normal magnesium salt) preferably satisfy simultaneously the following formulas F1 and F2.$\text{F1: Mg/Al = 0.46-0.55,}$ and$\text{F2: Cl/Al = 1.3-3.7.}$

If the molar ratio of Cl/Al=4, the aluminium salt and the magnesium salt are normal salts.

Note that, a chloride ion (Cl -) is shown in the formulas, but a nitrate ion (NO₃⁻), a sulfate ion (SO₄²⁻), etc. may be used instead.

In the present invention, the basic aqueous solution including prescribed amounts of the aluminium salt and the magnesium salt is sprayed and roasted. The spray roasting may be executed under ordinary conditions, e.g., spraying the basic aqueous solution (20 cps or less at the temperature of 20°C) and roasting the mist of the same in the oxidizing atmosphere in which the temperature is maintained between 800-1,000°C.

Grain shapes of the bodies made by the above described spray roasting method are shown in Figs. 1 and 2. Fig. 1 shows material made under condition No. 3 of TABLE-2; it is a microphotograph taken by a scanning electron microscope (500x magnification); Fig. 2 shows sectional faces of the particles shown in Fig. 1; it is a microphotograph taken by the scanning electron microscope (500x magnification).

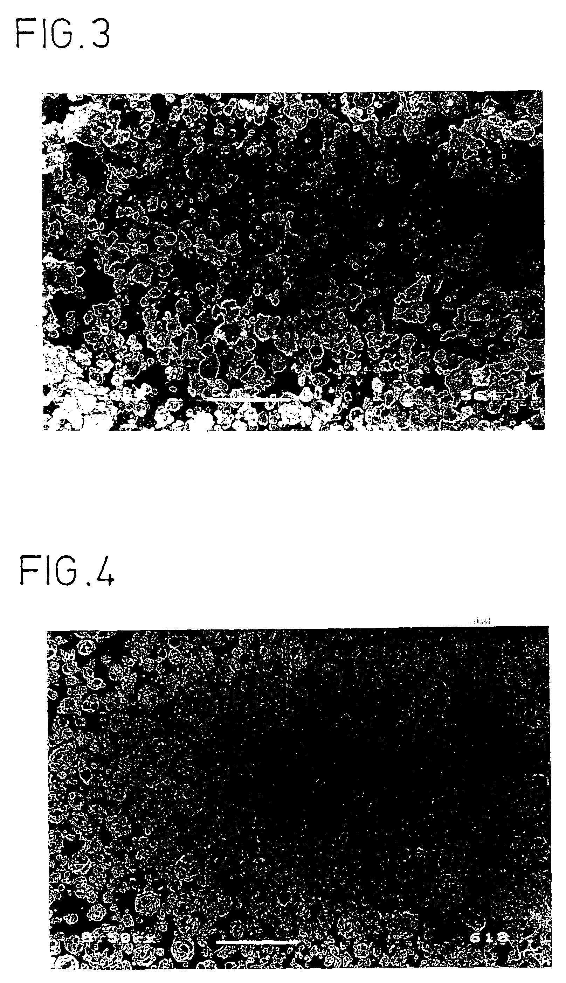

On the other hand, Fig. 3 shows material produced in a comparative example, under a condition No. 4 of TABLE-2. The total oxide-converted concentration of the aluminium salt and the magnesium salt in the normal salt aqueous solution is less than 12 wt% (11.8 wt%). The view is a microphotograph taken by the scanning electron microscope (500x magnification). Fig. 4 shows sectional faces of the particles shown in Fig. 3; it is a microphotograph taken by the scanning electron microscope (500x magnification).

As clearly shown in Figs. 1-4, hollow rate of the grains of the embodiment is higher than that of the comparative example. And walls of the hollow grains of the embodiment are quite thin.

By pulverizing the material consisting of the hollow grains having high hollow rate and very thin walls, a fine powder having particles of diameter of 1µm or less can be made easily.

The loose bulk density of the fine powder can be 0.5 g/cm³ or more, as the particles can be packed with high concentration.

On the other hand, when the product of the comparative example shown in Figs. 3 and 4 is pulverized in the same manner, the diameter of the resulting particles is about 1.4 µm, and not 1µm or less.

Note that the pulverization is effected by an ordinary milling device, e.g., a ball mill.

By employing the fine powder produced by the present invention to produce a ceramic material, products having high density and great toughness can be produced.

Successively, experimental examples of the present invention will be explained.

### (Experiment 1)

The poly aluminium chloride is selected as the aluminium salt; the magnesium chloride is selected as the magnesium salt. They are dissolved in water to adjust Mg/Al molar ratio and Cl/Al molar ratio as shown in TABLE-1.

Temperature of the aqueous solution is changed and its viscosity according to the temperature is measured. The results are shown in TABLE-1.

**TABLE-1**

| NO. | AQUEOUS SOLUTION | 5 °C | 30 °C | 50 °C |
|---|---|---|---|---|
| 1 | Mg/Al=0.50 Cl/Al=2.8 CONCENTRATION 12 % | 12.5cps | 8.0cps | 6.0cps |
| 2 | Mg/Al=0.51 Cl/Al=2.0 CONCENTRATION 18 % | 21.0 | 11.0 | 9.5 |
| 3 | Mg/Al=0.50 Cl/Al=1.6 CONCENTRATION 18% | 18.5 | 10.0 | 7.5 |
| 4 | Mg/Al=0.50 Cl/Al=4.0 CONCENTRATION 11.8% | 37.1 | 15.3 | 10.7 |
| [Note] "No. 4" is a comparative example; and "CONCENTRATION" is the oxide-converted concentration. | | | | |

As clearly shown in TABLE-1, in the basic aqueous solution No. 1-3 (embodiments), the amount of the aluminium salt and the magnesium salt dissolved is greater than that of the aqueous solution No. 4 (the comparative example), which is an aqueous solution of the normal salt, but increasing the viscosity of the embodiments can be restricted.

### (Experiment 2)

The poly aluminium chloride and the magnesium chloride are dissolved to make the basic aqueous solution. The Mg/Al molar ratio, the Cl/Al molar ratio, and the viscosity and the concentration of the solution at temperature of 20°C are shown as No. 1-3 of TABLE-2.

The basic aqueous solution is sprayed in a furnace to make the particles ("roasted grains") of the aluminium-magnesium oxide. X-ray diffraction analysis shows that the product mainly has the spinel-type crystal form. The loose bulk density and average grain diameter measured are also shown in No. 1-3 of TABLE-2.

Next, 700 g of the material and a resin-coated ball having diameter of 20 mm and weight of 7.3 kg were put in a plastic pot having capacity of 10 liters. The pot was rotated for 10 hours with rotational speed of 50 rpm to pulverize. The average grain diameter and the loose bulk density of the resulting powder ("fine grains") are also shown in No. 1-3 of TABLE-2.

An aqueous solution of the normal salts, which are normal salts of the aluminium chloride and the magnesium chloride, was sprayed and roasted, and the product was pulverized, as a comparative example. The Mg/Al molar ratio, the Cl/Al molar ratio, the viscosity and the concentration of the solution at temperature of 20°C, the average grain diameter and the loose bulk density of the initial product (roasted grains), and the average grain diameter and the loose bulk density of the pulverized product are shown in No. 4 of TABLE-2.

Note that, by the X-ray diffraction analysis, the roasted grains of the comparative example also mainly have the spinel-type crystal form.

**TABLE-2**

| NO | AQUEOUS SOLUTION | | | | ROASTED GRAINS | | | FINE GRAINS | |
|---|---|---|---|---|---|---|---|---|---|
| | CONCENTRATION (wt%) | Mg/Al MOLAR RATIO | Cl/Al MOLAR RATIO | 20°C VISCOSITY (cps) | ROASTING TEMPERATURE °C) | LOOSED BULK DENSITY /cm³) | AVERAGE DIAMETER µm | LOOSED BULK DENSITY (g/cm³) | AVERAGE DIAMETER µm |
| 1 | 16.0 | 0.50 | 2.6 | 18.3 | 800 | 0.09 | 12.7 | 0.56 | 0.4 |
| 2 | 16.0 | 0.50 | 2.0 | 10.1 | 1000 | 0.07 | 28.5 | 0.56 | 0.7 |
| 3 | 18.0 | 0.51 | 1.6 | 10.6 | 800 | 0.03 | 35.8 | 0.54 | 0.7 |
| 4 | 11.8 | 0.50 | 4.0 | 20.2 | 800 | 0.16 | 5.9 | 0.44 | 1.4 |
| [Note] "No. 4" is a comparative example; "CONCENTRATION" is the oxide-converted concentration; "AVERAGE DIAMETER of ROASTED GRAINS" is an average length of longitudinal length of 500 grains, which are measured by the scanning type electron microscope; "AVERAGE DIAMETER of FINE GRAINS" is value of median diameter (by weight) (d_{50%}) measured by a centrifugal particle size analyzer; and "LOOSE BULK DENSITY" is measured on the basis of JIS-H-1902. | | | | | | | | | |

As clearly shown in TABLE-2, the roasted grains of the No. 1-3 (embodiments of the present invention) have greater average diameter, lower loose bulk density, higher hollow rate, and thinner walls than the roasted grains of No. 4 (the comparative example). The hollow grains of the embodiments can be pulverized and easily formed into fine grains having the diameter of 1 µm or less.

Note that, as to the No. 3 and the No. 4 of TABLE-2, the microphotographs of the roasted grains taken by the scanning electron microscope (500x magnification) are shown in Figs. 1 and 3; the microphotographs of their sectional faces taken by the scanning electron microscope (500x magnification) are shown in Figs. 2 and 4.

## Claims

1. A method of making an aluminium magnesium oxide, comprising the steps of:
spraying an aqueous solution of an aluminium salt and a magnesium salt in an oxidising atmosphere, wherein said aqueous solution is a basic aqueous solution including said aluminium salt and said magnesium salt in which the total content of the aluminium salt and magnesium salt calculated as oxides is 12-20 wt%; and
roasting said sprayed aqueous solution so as to make an aluminium magnesium oxide mainly having the spinel-type crystal form which is in the form of hollow particles having an average diameter of 10µm or more and a loose bulk density of 0.15 g/cm³ or less.

2. The method according to claim 1, wherein said aluminium magnesium oxide comprises 70-73 wt% of aluminium calculated as alumina (Al₂O₃); and
27-30 wt% of magnesium calculated as magnesia (MgO).

3. The method according to claim 1 or claim 2, wherein said basic aqueous solution satisfies the following formulas:$\text{Mg/Al (molar ratio) = 0.46 - 0.55;}$ and$\text{Cl/Al (molar ratio) = 1.3 - 3.7.}$

4. The method according to any one of claims 1-3, wherein said aluminium salt is polyaluminium chloride.

5. A method of making fine aluminium magnesium oxide powder comprising the steps of:
spraying an aqueous solution of an aluminium salt and a magnesium salt in an oxidising atmosphere, wherein said aqueous solution is a basic aqueous solution including said aluminium salt and said magnesium salt in which the total content of the aluminium salt and magnesium salt calculated as oxides is 12-20 wt%;
roasting said sprayed aqueous solution so as to make an aluminium magnesium oxide mainly having the spinel-type crystal form, which is in the form of hollow particles having an average diameter of 10 µm or more and a loose bulk density of 0.15 g/cm³ or less; and
pulverizing said hollow particles into said fine powder having a particle size of 1µm or less.

6. The method according to claim 5, wherein said aluminium magnesium oxide comprise 70-73 wt% of aluminium calculated as alumina (Al₂O₃); and
27-30 wt% of magnesium calculated as magnesia (MgO).

7. The method according to claim 5 or claim 6, wherein the loose bulk density of said fine powder is 0.5 g/cm³ or more.

## Patentansprüche

1. Verfahren des Herstellens eines Aluminium-Magnesiumoxides, mit den Schritten:
Sprühen einer wäßrigen Lösung eines Aluminimsalzes und eines Magnesiumsalzes in einer oxidierenden Atmosphäre, worin die wäßrige Lösung eine basische wäßrige Lösung ist, die das Aluminiumsalz und das Magnesiumsalz enthält, in der der Gesamtinhalt des Aluminiumsalzes und des Magnesiumsalzes als Oxide berechnet 12-20Gew% beträgt; und
Rösten der gesprühten wäßrigen Lösung so, daß ein Aluminuium-Magnesiumoxid hergestellt wird, das hauptsächlich die Spinellkristallform aufweist, das in der Form von hohlen Teilchen mit einem mittleren Durchmesser von 10µm oder mehr und einer losen Fülldichte von 0,15g/cm³ oder weniger vorliegt.

2. Verfahren nach Anspruch 1, bei dem das Aluminium-Magnesiumoxid 70-73Gew% von Aluminium als Aluminiumoxid (Al₂O₃) berechnet und 27-30Gew% von Magnesium als Magnesiumoxid (MgO) berechnet aufweist.

3. Verfahren nach Anspruch 1 oder 2, bei dem die basische wäßrige Lösung die folgenden Formeln erfüllt:$\text{Mg/Al (Molverhältnis) = 0,46-0,55}$ und$\text{Cl/Al (Molverhältnis) = 1,3-3,7.}$

4. Verfahren nach einem der Ansprüche 1 bis 3, bei dem das Aluminiumsalz Polyaluminiumchlorid ist.

5. Verfahren zum Herstellen eines feinen Aluminium-Magnesiumoxidpulvers mit den Schritten:
Sprühen einer wäßrigen Lösung eines Aluminiumsalzes und eines Magnesiumsalzes in einer oxidierenden Atmosphäre, worin die wäßrige Lösung eine basische wäßrige Lösung ist, die das Aluminiumsalz und das Magnesiumsalz enthält, in der der Gesamtinhalt des Aluminiumsalzes und des Magnesiumsalzes als Oxide berechnet 12-20Gew% beträgt;
Rösten der gesprühten wäßrigen Lösung so, daß ein Aluminium-Magnesiumoxid hergestellt wird, das hauptsächlich die Spinellkristallform aufweist, das in der Form von hohlen Teilchen mit einem mittleren Durchmesser von 10µm oder mehr und einer losen Fülldichte von 0,15g/cm³ oder weniger vorliegt; und
Pulverisieren der hohlen Teilchen in das feine Pulver mit einer Teilchengröße von 1µm oder weniger.

6. Verfahren nach Anspruch 5, bei dem das Aluminium-Magnesiumoxid 70-73Gew% von Aluminium berechnet als Aluminiumoxid (Al₂O₃) und 27-30Gew% von Magnesium berechnet als Magnesiumoxid (MgO) aufweist.

7. Verfahren nach Anspruch 5 oder 6, bei dem die lose Fülldichte des feinen Pulvers 0,5g/cm³ oder mehr beträgt.

## Revendications

1. Procédé pour la préparation d'un oxyde d'aluminium et de magnésium, comprenant les étapes consistant à :
pulvériser une solution aqueuse d'un sel d'aluminium et d'un sel de magnésium dans une atmosphère oxydante, procédé dans lequel la solution aqueuse est une solution aqueuse basique comprenant ledit sel d'aluminium et ledit sel de magnésium dans laquelle la teneur totale en sel de magnésium, calculée en tant qu'oxydes, est de 12 - 20 % en poids; et
griller ou calciner ladite solution aqueuse pulvérisée de façon à obtenir un oxyde d'aluminium et de magnésium ayant principalement la forme cristalline de type Spinel qui se présente sous la forme de particules creuses d'un diamètre moyen de 10 µm ou davantage et d' une densité en vrac de 0,15 g/cm³.

2. Procédé selon la revendication 1, dans lequel ledit oxyde d'aluminium et de magnésium comprend 70 - 73 % en poids de l'aluminium, calculés comme alumine (Al₂O₃); et
27 - 30 % en poids de magnésium calculés comme magnésie ( MgO ).

3. Procédé selon la revendication 1 ou 2, dans lequel la solution aqueuse basique répond aux formules suivantes :$\text{Mg/Al ( rapport molaire ) = 0,46 - 55;}$ et$\text{Cl/Al ( rapport molaire ) = 1,3 - 3,7.}$

4. Procédé selon l'une quelconque des revendications précédentes 1 - 3, dans lequel ledit sel d'aluminium est le chlorure de polyaluminium.

5. Procédé pour la préparation de poudre d'oxyde d'aluminium et de magnésium comprenant les étapes consistant à :
pulvériser une solution aqueuse d'un sel d'aluminium et d'un sel de magnésium dans une atmosphère oxydante, procédé dans lequel ladite solution aqueuse est une solution aqueuse basique contenant ledit sel d'aluminium et ledit sel de magnésium, calculés comme oxydes, est de 12 - 20 % en poids;
griller ou calciner ladite solution aqueuse pulvérisée de façon à obtenir un oxyde de magnésium et d'aluminium ayant principalement la forme cristalline de type Spinel qui se présente sous la forme de particules creuses ayant un diamètre de 10 µm ou davantage et une densité en vrac de 0,15 g/cm³ ou moins; et
pulvériser lesdites particules creuses en poudre fine ayant une taille particulaire de 1 µm ou moins.

6. Procédé selon la revendication 5, dans lequel ledit oxyde de magnésium et d'aluminium comprend 70 - 73 % en poids d'aluminium calculés en tant qu'alumine ( Al₂ O₃ ); et
27 - 30 % en poids de magnésium, calculés en tant que magnésie (MgO).

7. Procédé selon la revendication 5 ou la revendication 6, dans lequel la densité en vrac de ladite poudre fine est de 0,5 g /cm³ ou plus.
